# EUROPEAN PATENT SPECIFICATION

(11) **EP 3 151 207 B1**
(45) Date of publication and mention of the grant of the patent: **10.03.2021**
(21) Application number: 16186343.6
(22) Date of filing: 30.08.2016
(51) Int. Cl.: G08B 21/02, G08B 7/06, H04M 1/725, G08B 21/04

(54) **ALARMING METHOD AND ALARMING DEVICE**
ALARMIERUNGSVERFAHREN UND ALARMIERUNGSVORRICHTUNG
PROCÉDÉ ET DISPOSITIF D'ALARME

(30) Priority: 30.09.2015 CN 201510640719
(43) Date of publication of application: 05.04.2017
(73) Proprietor: Xiaomi Inc., Beijing 100085 (CN)
(72) Inventor: HOU, Enxing, Beijing 100085 (CN); DAI, Long, Beijing 100085 (CN); GAO, Ziguang, Beijing 100085 (CN)
(74) Representative: Cabinet Beau de Loménie

(56) References cited:
- WO-A2-2015/033152
- CN-A- 105 243 799
- US-A- 5 790 019
- US-A1- 2014 145 847
- US-A1- 2014 344 375
- US-A1- 2015 230 022

## Description

### TECHNICAL FIELD

The present invention generally relates to the field of wearable devices, and more particularly to an alarming method and an alarming device.

### BACKGROUND

With the development of mobile Internet, advances of technology and emergence of high-performance low-power processor chips, wearable devices have become commercially available products from a mere concept, and have become indispensable assistant devices for people's daily lives.

Currently, the wearable devices comprise smart glasses, smart gloves, smart bracelets, smart watches, etc. For example, a smart bracelet can sense a sleeping state of a wearer and provide sleep quality assessment. The smart bracelet can also sense a moving state of the wearer and provide a daily movement report, and so on. Moreover, with the development of the Internet of Things, various smart devices have stepped into household lives, such as smart curtains, smart smoke alarming devices, and smart cameras. Alarms can be promptly sent to a mobile phone terminal of the user once an abnormal situation occurs related to such smart devices. However, since the user does not often carry a mobile phone with him, in this case, it may be impossible for the user to immediately receive the alarming message issued by a smart device, causing delay and missing the optimal time to handle the abnormality.

Document WO 2015/033152 discloses an intelligent wristband system, wearable by a user, configured to act as a personal assistant. Document US 2014/0344375 A1 discloses a method and system for wireless activity monitoring with notifications.

### SUMMARY

In order to solve the problem existing in the prior art, the present invention provides an alarming method and an alarming device. The invention is defined in appended claims 1 and 11. The technical solution is as follows.

According to a first aspect of embodiments, the invention relates to an alarming method, comprising:
when receiving a message regarding an abnormal situation sent by a smart device, detecting a current behavior state of a user using a wearable device;
acquiring an operation type corresponding to the behavior state; and
triggering the wearable device to perform a corresponding notifying operation according to the operation type.

In a particular embodiment, the behavior state is: a sleeping state or a non-sleeping state; the sleeping state is: a deep sleeping state or a light sleeping state; the non-sleeping state is: a moving state or a stationary state; and
the notifying operation comprises at least one of: flashing a light, generating vibration and ringing an alarm.

In a particular embodiment, when the behavior state is the sleeping state, acquiring the operation type corresponding to the behavior state comprises:
acquiring a first operation type corresponding to the sleeping state; and
triggering the wearable device to perform the corresponding notifying operation according to the operation type comprises:
   according to the first operation type, triggering the wearable device to perform a vibration operation with a first intensity, or triggering the wearable device to perform the vibration operation with the first intensity and an operation of ringing an alarm with a first level of decibel.

In a particular embodiment, the method further comprises:
acquiring a preset scenario mode of the wearable device; and
acquiring the operation type corresponding to the behavior state comprises:
   acquiring an operation type corresponding to the behavior state and the preset scenario mode.

In a particular embodiment, when the behavior state is the sleeping state and the scenario mode is a do-not-disturb mode, acquiring the operation type corresponding to the behavior state and the preset scenario mode comprises:
acquiring a second operation type corresponding to the sleeping state and the do-not-disturb mode; and
triggering the wearable device to perform the corresponding notifying operation according to the operation type comprises:
   according to the second operation type, triggering the wearable device to perform a vibration operation with a second intensity.

In a particular embodiment, when the behavior state is a non-sleeping state and the scenario mode is a do-not-disturb mode, acquiring the operation type corresponding to the behavior state and the preset scenario mode comprises:
acquiring a third operation type corresponding to the non-sleeping state and the do-not-disturb mode; and
triggering the wearable device to perform the corresponding notifying operation according to the operation type comprises:
   according to the third operation type, triggering the wearable device to perform a vibration operation with a third intensity, or triggering the wearable device to perform the vibration operation with the third intensity and a first flashing-light operation.

In a particular embodiment, the method further comprises:
when receiving no instruction inputted by the user within a predetermined time period, triggering the wearable device to perform a vibration operation with a fourth intensity, or triggering the wearable device to perform the vibration operation with the fourth intensity and an operation of ringing an alarm with a second level of decibel, or triggering the wearable device to perform the vibration operation with the fourth intensity, the operation of ringing an alarm with the second level of decibel and a second flashing-light operation;
wherein the fourth intensity is larger than the first intensity, and the second level of decibel is larger than the first level of decibel.

In a particular embodiment, the method further comprises:
when receiving a cancelation instruction inputted by the user within a predetermined time period, according to the cancelation instruction, generating a cancelation message and sending the cancelation message to the smart device for the smart device to disable notifying of abnormality according to the cancelation message.

In a particular embodiment, the method further comprises:
when receiving an alarming instruction inputted by the user within a predetermined time period, according to the alarming instruction, generating an alarming message; and
sending the alarming message to a receiving party of the alarming message to perform an alarming operation according to the alarming message.

In a particular embodiment, the alarming operation comprises at least one of: turning on a monitoring camera and calling an emergency telephone number.

According to a second aspect of embodiments, the invention relates to a system comprising a mobile terminal, a smart device and a wearable device, wherein the mobile terminal comprises:
a detecting module configured to, when receiving a message regarding an abnormal situation sent by a smart device, detect a current behavior state of a user using a wearable device;
an operation acquiring module configured to acquire an operation type corresponding to the behavior state detected by the detecting module; and
a triggering module configured to trigger the wearable device to perform a corresponding notifying operation according to the operation type acquired by the operation acquiring module.

In a particular embodiment, the behavior state detected by the detecting module is: a sleeping state or a non-sleeping state; the sleeping state is: a deep sleeping state or a light sleeping state; the non-sleeping state is: a moving state or a stationary state; and
the notifying operation triggered by the triggering module comprises at least one of: flashing a light, generating vibration and ringing an alarm.

In a particular embodiment, the operation acquiring module comprises: a first operation acquiring sub-module;
wherein the first operation acquiring sub-module is configured to, when the behavior state detected by the detecting module is the sleeping state, acquire a first operation type corresponding to the sleeping state; and
the triggering module comprises: a first triggering sub-module;
wherein the first triggering sub-module is configured to, according to the first operation type acquired by the first operation acquiring sub-module, trigger the wearable device to perform a vibration operation with a first intensity, or trigger the wearable device to perform the vibration operation with the first intensity and an operation of ringing an alarm with a first level of decibel.

In a particular embodiment, the mobile terminal further comprises:
a scenario acquiring module configured to acquire a preset scenario mode of the wearable device;
the operation acquiring module is further configured to acquire an operation type corresponding to the behavior state detected by the detecting module and the preset scenario mode acquired by the scenario acquiring module.

In a particular embodiment, the operation acquiring module comprises: a second operation acquiring sub-module;
wherein the second operation acquiring sub-module is configured to, when the behavior state detected by the detecting module is the sleeping state and the scenario mode acquired by the scenario acquiring module is a do-not-disturb mode, acquire a second operation type corresponding to the sleeping state and the do-not-disturb mode; and
the triggering module comprises: a second triggering sub-module;
wherein the second triggering sub-module is configured to, according to the second operation type acquired by the second operation acquiring sub-module, trigger the wearable device to perform a vibration operation with a second intensity.

In a particular embodiment, the operation acquiring module comprises: a third operation acquiring sub-module;
wherein the third operation acquiring sub-module is configured to, when the behavior state detected by the detecting module is a non-sleeping state and the scenario mode detected by the detecting module is a do-not-disturb mode, acquire a third operation type corresponding to the non-sleeping state and the do-not-disturb mode; and
the triggering module comprises: a third triggering sub-module;
wherein the third triggering sub-module is configured to, according to the third operation type acquired by the third operation acquiring sub-module, trigger the wearable device to perform a vibration operation with a third intensity, or trigger the wearable device to perform the vibration operation with the third intensity and a first flashing-light operation.

In a particular embodiment, the mobile terminal further comprises:
a delay processing module configured to, when no instruction inputted by the user is received within a predetermined time period, trigger the wearable device to perform a vibration operation with a fourth intensity, or trigger the wearable device to perform the vibration operation with the fourth intensity and an operation of ringing an alarm with a second level of decibel, or trigger the wearable device to perform the vibration operation with the fourth intensity, the operation of ringing an alarm with the second level of decibel and a second flashing-light operation;
wherein, the fourth intensity is larger than the first intensity, and the second level of decibel is larger than the first level of decibel.

The first, second and third intensities of the vibration operations of the above embodiments can either be equal or different, as for the first and the second levels of decibel of the operations of ringing an alarm.

In a particular embodiment, the mobile terminal further comprises:
a cancelation instruction processing module configured to, when a cancelation instruction inputted by the user is received within a predetermined time period, according to the cancelation instruction, generate a cancelation message; and
a first sending module configured to send the cancelation message generated by the cancelation instruction processing module to the smart device, for the smart device to disable notifying of abnormality according to the cancelation message.

In a particular embodiment, the mobile terminal further comprises:
an alarming instruction processing module configured to, when an alarming instruction inputted by the user is received within a predetermined time period, according to the alarming instruction, generate an alarming message; and
a second sending module configured to send the alarming message generated by the alarming instruction processing module to a receiving party of the alarming message to perform an alarming operation according to the alarming message.

In a particular embodiment, the alarming operation comprises at least one of: turning on a monitoring camera and calling an emergency telephone number.

In an exemplary embodiment, the steps of the above alarming method are determined by computer program instructions.

Consequently, according to a fourth aspect, the invention also relates to a computer program for executing the steps of an alarming method as described above when this program is executed by a computer.

This program can use any programming language and take the form of source code, object code or a code intermediate between source code and object code, such as a partially compiled form, or any other desirable form.

According to a fifth aspect, the invention also relates to a computer-readable information medium containing instructions of a computer program as described above.

The information medium can be any entity or device capable of storing the program. For example, the information medium can comprise storage means such as a ROM, for example a CD ROM or a microelectronic circuit ROM, or magnetic storage means, for example a diskette (floppy disk) or a hard disk. Alternatively, the information medium can be an integrated circuit in which the program is incorporated, the circuit being adapted to execute the method in question or to be used in its execution.

The technical solution according to embodiments of the present invention may have the following beneficial effects.
(1) In one embodiment, when a message regarding an abnormal situation sent by a smart device is received, a current behavior state of a user is detected using a wearable device. An operation type corresponding to the behavior state is acquired. Then, the wearable device is triggered to perform a corresponding notifying operation according to the operation type. Thereby, the abnormal state of the smart device can be promptly notified to the user using the device wore by the user. Moreover, the manner in which the notifying operation will be carried out is determined taking into consideration the current behavior state of the user which is detected by the wearable device, so as to perform a notifying operation which is more suitable for the current behavior state of the user. Thus, it can ensure the real time performance and effectiveness of the delivery of the message regarding an abnormal situation.
(2) In another embodiment, the behavior state is: a sleeping state or a non-sleeping state; the sleeping state is: a deep sleeping state or a light sleeping state; the non-sleeping state is: a moving state or a stationary state; and the notifying operation comprises at least one of: flashing a light, generating vibration and ringing an alarm. By diversifying behavior states, the matching degree with the current behavior state of the user can be increased, to be more consistent with the actual behavior state of the user. The notifying operations can be diversified to improve the notifying effect, to make the user promptly perceive the notifying operation.
(3) In another embodiment, when the behavior state is the sleeping state, a first operation type corresponding to the sleeping state is acquired. According to the first operation type, the wearable device is triggered to perform a vibration operation with a first intensity, or the wearable device is triggered to perform the vibration operation with the first intensity and an operation of ringing an alarm with a first level of decibel. Thereby, when it is detected that the user is in the sleeping state, the user can be quickly wakened by vibration or by vibration and ringing alarms. By specializing the way of notifying with respect to the behavior state, it can ensure the real time performance and effectiveness of the delivery of the message regarding an abnormal situation.
(4) In another embodiment, a preset scenario mode of the wearable device is further acquired. Then, an operation type corresponding to the behavior state and the preset scenario mode are acquired. The wearable device is triggered to perform a corresponding notifying operation according to the operation type. Thereby, by combining the current behavior state of the user with the scenario mode to find a most suitable operation type, the considered factors can be further expanded and refined. Thus, an optimal way of notifying which is specialized with respect to the behavior state and the operation scenario can be provided to the user, improving the effectiveness of notifying the user and improving user experience.
(5) In another embodiment, when the behavior state is the sleeping state and the scenario mode is a do-not-disturb mode, a second operation type corresponding to the sleeping state and the do-not-disturb mode is acquired. According to the second operation type, the wearable device is triggered to perform a vibration operation with a second intensity. Thereby, based on the actual needs of the user, when the user does not want to be disturbed in his sleep and sets up a silent mode, while the emergency of abnormality should nevertheless be notified to the user, the wearable device can be triggered to perform the vibration operation with the second intensity, to make the user perceive the vibration notification. Thus, it can not only satisfy the user needs, but also effectively notify the user.
(6) In another embodiment, when the behavior state is the non-sleeping state and the scenario mode is a do-not-disturb mode, a third operation type corresponding to the non-sleeping state and the do-not-disturb mode is acquired. According to the third operation type, the wearable device is triggered to perform a vibration operation with a third intensity, or the wearable device is triggered to perform the vibration operation with the third intensity and a first flashing-light operation. Thereby, based on the actual needs of the user, when the user is at a meeting and sets up a silence mode since he does not want the message to disturb people around, the wearable device can be triggered to perform a vibration operation with a third intensity or the wearable device can be triggered to perform the vibration operation with the third intensity and a first flashing-light operation, to make the user perceive the notification of the abnormality. Thus, it can not only satisfy the user needs, but also effectively notify the user.
(7) In another embodiment, when no instruction inputted by the user is received within a predetermined time period, the wearable device is triggered to perform a vibration operation with a fourth intensity, or the wearable device is triggered to perform the vibration operation with the fourth intensity and an operation of ringing an alarm with a second level of decibel, or the wearable device is triggered to perform the vibration operation with the fourth intensity, the operation of ringing an alarm with the second level of decibel and a second flashing-light operation. The fourth intensity is larger than the first intensity, and the second level of decibel is larger than the first level of decibel. Thereby, when the user does not perceive the notification within the preset time period, the notification can be performed in a more intense manner, to make the user timely perceive the notification and to ensure the effectiveness of the delivery of the message regarding an abnormal situation.
(8) In another embodiment, when a cancelation instruction inputted by the user is received within a predetermined time period, according to the cancelation instruction, a cancelation message is generated and sent to the smart device for the smart device to disable notifying of abnormality according to the cancelation message. Thereby, diversified operation modes can be provided to the user, improving the user experience.
(9) In another embodiment, when an alarming instruction inputted by the user is received within a predetermined time period, according to the alarming instruction, an alarming message is generated and sent out to a receiving party of the alarming message to perform an alarming operation according to the alarming message. Thereby, thanks to the alarming operation, the user can have the abnormality timely and effectively handled, improving user experience and safeguarding the benefit of the user.
(10) In another embodiment, the alarming operation comprises at least one of: turning on a monitoring camera and calling an emergency telephone number. By turning on a monitoring camera through the alarming instruction, the user can learn, as early as possible, about the situation at the site of the smart device which sends the message regarding an abnormal situation. Or, by calling an emergency telephone number, the abnormality can be effectively notified to someone who has the capability to handle the abnormality. Thus, it can avoid damage caused by the abnormality as much as possible.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating an alarming method according to an exemplary embodiment;
Fig. 2 is a flow chart illustrating an alarming method according to another exemplary embodiment;
Fig. 3 is a flow chart illustrating an alarming method according to another exemplary embodiment;
Fig. 4 is a flow chart illustrating an alarming method according to another exemplary embodiment;
Fig. 5 is a block diagram of an alarming device according to an exemplary embodiment;
Fig. 6 is a block diagram of an alarming device according to another exemplary embodiment; and
Fig. 7 is a block diagram of an alarming device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

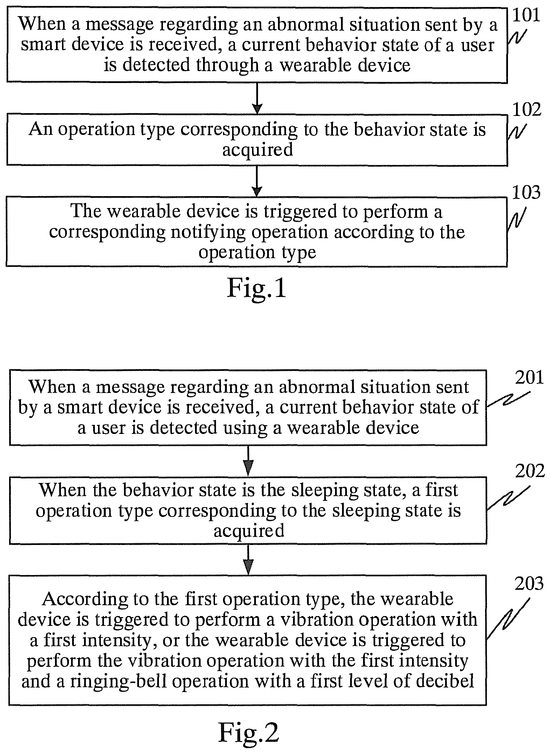

Fig. 1 is a flow chart illustrating an alarming method according to an exemplary embodiment. As shown in Fig. 1, the alarming method in the present embodiment can be performed by a terminal (a client terminal device) to cause a wearable device to perform an alarming operation, or can also be directly performed by a wearable device. In the present embodiment, as an example, the alarming method is performed by a terminal (a client terminal device) to cause a wearable device to perform an alarming operation. The method of the present embodiment comprises the following steps.

In step 101, when a message regarding an abnormal situation sent by a smart device is received, a current behavior state of a user is detected using a wearable device.

The alarming method can be performed by a terminal (a client terminal device), such as a mobile terminal device (a tablet computer, a mobile phone or the like). The mobile terminal, a smart device (such as a smart refrigerator, a smart curtain, a smart smoke alarming device, a smart camera or the like) based on the Internet of Things, and a wearable device (such as smart glasses, smart gloves, a smart bracelet, a smart watch or the like) can be connected to one another via the Internet or a network of other forms (such as Bluetooth, Infrared, Femtocell with a small coverage, ZigBee under ZigBee protocol and other home networks), to achieve three-party data communication between the smart device and the mobile terminal and between the mobile terminal and the wearable device. Alternatively, the method can also be performed through a two-party direct data communication between the smart device and the wearable device. Thus, a network of Things for data communication and smart operation can be achieved. Hereinafter the method will be described as performed through, for example, a three-party data communication among the smart device, the mobile terminal and the wearable device, where the wearable device is a smart bracelet.

When an abnormal situation occurs related to the smart device (for example, the smart curtain detects that the curtain is opened, the smart camera identifies a stranger in a captured image using image recognition, the smart device itself fails, or other situations), the smart device sends a message regarding an abnormal situation to the mobile terminal. The mobile terminal receives the message regarding an abnormal situation sent by the smart device, acquires a current behavior state of the user (such as whether the user is in a sleeping state or in a moving state, and the like) using detection of the smart wearable bracelet wore by the user, triggers an operation of a type corresponding to the current behavior state of the user, and notifies the user that an abnormal situation occurs related to the smart device.

In step 102, an operation type corresponding to the behavior state is acquired.

In the mobile terminal, a table of corresponding relationship between various behavior states and operation types are previously provided. Based on the behavior state of the user detected by the smart bracelet, the terminal inquires the corresponding relationship table to search for an operation type corresponding to the behavior state, and acquire the operation type.

In step 103, the wearable device is triggered to perform a corresponding notifying operation according to the operation type.

According to the operation type, the mobile terminal sends to the wearable device (such as the smart bracelet) an operation instruction corresponding to the operation type, for the wearable device to perform an alarming process operation corresponding to the operation instruction. For example, the operation type is generating vibration with a certain intensity or frequency. Then, the mobile terminal sends a vibration generating instruction to the smart bracelet, to trigger a vibration sensor in the smart bracelet to generate vibration according to the vibration generating instruction, to notify the user that an abnormality occurs.

In summary, according to the alarming method provided by the present embodiment, when a message regarding an abnormal situation sent by a smart device is received, a current behavior state of a user is detected using a wearable device. An operation type corresponding to the behavior state is acquired. Then, the wearable device is triggered to perform a corresponding notifying operation according to the operation type. Thereby, the abnormal situation related to the smart device can be promptly notified to the user using the device wore by the user. Moreover, the operation manner in which the notifying operation will be carried out is determined taking into consideration the current behavior state of the user which is detected by the wearable device, so as to perform a notifying operation which is more suitable for the current behavior state of the user. Thus, it can ensure the real time performance and effectiveness of the delivery of the message regarding an abnormality.

Fig. 2 is a flow chart illustrating an alarming method according to another exemplary embodiment. As shown in Fig. 2, the alarming method in the present embodiment can be performed by a terminal (a client terminal device) to cause a wearable device to perform an alarming operation, or can also be directly performed by a wearable device. In the present embodiment, as an example, the alarming method is performed by a terminal (a client terminal device) to cause a wearable device to perform an alarming operation. Further, based on the above embodiment, the method of the present embodiment comprises the following steps.

In step 201, when a message regarding an abnormal situation sent by a smart device is received, a current behavior state of a user is detected using a wearable device.

The behavior state can be: a sleeping state or a non-sleeping state, where the sleeping state can be: a deep sleeping state or a light sleeping state; and the non-sleeping state can be: a moving state or a stationary state. The behavior states can be divided into different categories by those skilled in the art depending on detection capability of the wearable device, which is not limited by the present embodiment. For example, for the moving state of the non-sleeping state, by the wearable device detecting the pulse of the user, it can be decided whether the user is currently in a slow moving state such as walking, eating and the like, or in a fast moving state such as running, swimming and the like. Thereby, it can effectively notify the user with vibration signals of different intensities depending on a slow moving state or a fast moving state.

In step 202, when the behavior state is the sleeping state, a first operation type corresponding to the sleeping state is acquired.

The notifying operation can comprise at least one of: flashing a light, generating vibration and ringing an alarm. The notifying operation can be provided differently by those skilled in the art according to the operation feature of the wearable device, which is not limited by the present embodiment. For example, if the wearable device is smart glasses, the notifying operation can also comprise displaying an image or a video. If the wearable device is equipped with a voice module, the notifying operation can also comprise a voice notification. Regarding which behavior state corresponds to which operation type, an application (APP) for controlling the wearable device can be downloaded on the mobile terminal, and the APP is previously stored with a table of corresponding relationship between behavior states and operation types. Thus, based on the corresponding relationship table, the mobile terminal can acquire a first operation type corresponding to the sleeping state when the behavior state is the sleeping state. Then, the wearable device (such as the smart bracelet) is triggered to perform the notifying operation corresponding to the first operation type.

In step 203, according to the first operation type, the wearable device is triggered to perform a vibration operation with a first intensity, or the wearable device is triggered to perform the vibration operation with the first intensity and an operation of ringing an alarm with a first level of decibel.

The first operation type can be a vibration operation type, with the vibration intensity being a first intensity, or the first operation type can be a vibration and ringing operation type, with the vibration intensity being a first intensity and the volume of the ringing being a first level of decibel. Then, the wearable device (such as the smart bracelet) performs a corresponding vibration operation or ringing operation according to the received instruction triggered by the mobile terminal, to waken the user wearing the bracelet from the sleeping state.

In summary, according to the alarming method provided by the present embodiment, the behavior states are divided into: a sleeping state, a non-sleeping state. The sleeping state is: a deep sleeping state or a light sleeping state; the non-sleeping state is: a moving state or a stationary state; and the notifying operation comprises at least one of: flashing a light, generating vibration and ringing an alarm. Thereby, the behavior states can be diversified, the matching degree with the current behavior state of the user can be improved, to be more consistent with the actual behavior states of the user. The notifying operations can be diversified to improve the notifying effect, to make the user promptly perceive the notifying operation. Further, when the behavior state is the sleeping state, a first operation type corresponding to the sleeping state is acquired; and according to the first operation type, the wearable device is triggered to perform a vibration operation with a first intensity, or the wearable device is triggered to perform the vibration operation with the first intensity and an operation of ringing an alarm with a first level of decibel. Thereby, when it is detected that the user is in the sleeping state, the user can be quickly wakened by vibration or by vibration and ringing alarms. By specializing the way of notifying with respect to the behavior state, it can ensure the real time performance and effectiveness of the delivery of the message regarding an abnormal situation.

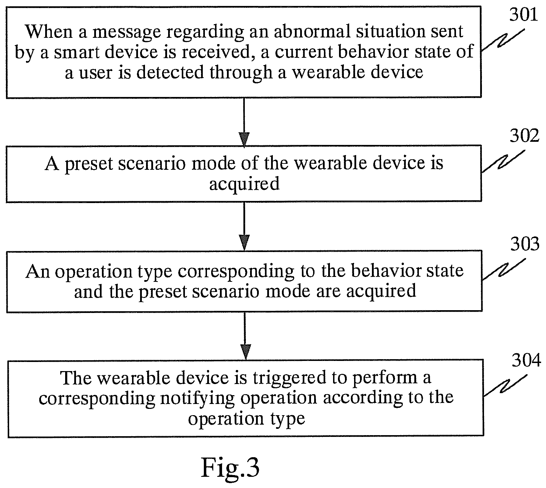

Fig. 3 is a flow chart illustrating an alarming method according to another exemplary embodiment. As shown in Fig. 3, the alarming method in the present embodiment can be performed by a terminal (a client terminal device) to cause a wearable device to perform an alarming operation, or can also be directly performed by a wearable device. In the present embodiment, as an example, the alarming method is performed by a terminal (a client terminal device) to cause a wearable device to perform an alarming operation. Further, based on the above embodiment, the method of the present embodiment comprises the following steps.

In step 301, when a message regarding an abnormal situation sent by a smart device is received, a current behavior state of a user is detected using a wearable device.

In step 302, a preset scenario mode of the wearable device is acquired.

It should be noted that the step 301 and the step 302 can be performed in other order. That is, the step 302 can be performed prior to the step 301. The mobile terminal can acquire a preset scenario mode of the wearable device periodically based on a preset acquiring cycle. Alternatively, after each time the wearable device changes its scenario mode setting, the wearable device initiatively reports its most recent wearable device to the mobile terminal. The scenario mode can comprise: a do-not-disturb mode, a flight mode, a meeting mode, an outdoor mode, etc. A distinct scenario mode corresponds to a respective notifying operation type. In contrast to the previous embodiments, in the present embodiment, not only the detected parameters of the user body, but also the scenario mode of the environment where the user is located are taken into consideration. Thereby, the considered factors for selecting a notifying operation are expanded, and therefore, the notification of abnormality can be more effectively perceived by the user in different environments and with different behavior states.

In step 303, an operation type corresponding to the behavior state and the preset scenario mode are acquired.

Similar to the previous step 102 and step 202, in the mobile terminal, a table of corresponding relationship among different behavior states, different scenario modes and different operation types can be previously provided. Based on the user behavior state detected by the wearable device (such as a bracelet) and the preset scenario mode, the mobile terminal can inquire the corresponding relationship table to search for an operation type corresponding to the behavior state and the preset scenario mode, to acquire the operation type and send an operation instruction corresponding to the operation type to the wearable device.

In step 304, the wearable device is triggered to perform a corresponding notifying operation according to the operation type.

In summary, according to the alarming method provided by the present embodiment, a preset scenario mode of the wearable device is further acquired. Then, an operation type corresponding to the behavior state and the preset scenario mode are acquired. The wearable device is triggered to perform a corresponding notifying operation according to the operation type. Thereby, by combining the current behavior state of the user with the scenario mode to find a most suitable operation type, the considered factors can be further expanded and refined. Thus, an optimal notifying manner which is specialized with respect to the behavior state and the operation scenario can be provided to the user, improving the effectiveness of the notification to the user and improving user experience.

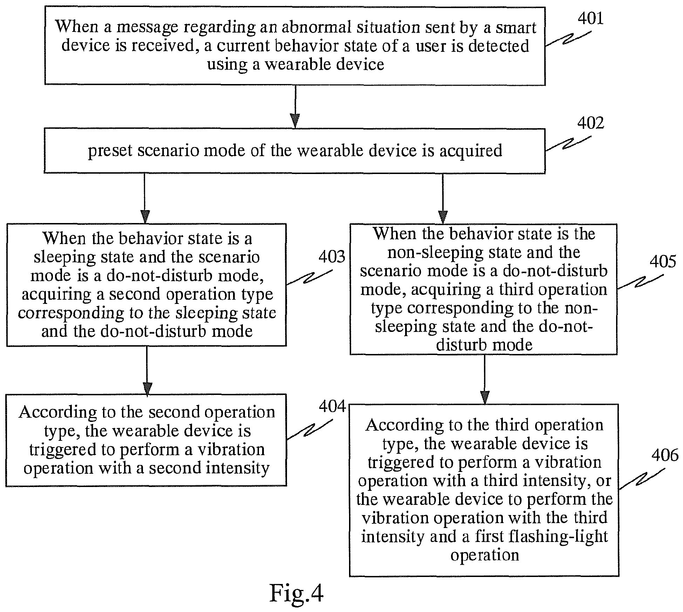

Fig. 4 is a flow chart illustrating an alarming method according to another exemplary embodiment. As shown in Fig. 4, the alarming method in the present embodiment can be performed by a terminal (a client terminal device) to cause a wearable device to perform an alarming operation, or can also be directly performed by a wearable device. In the present embodiment, as an example, the alarming method is performed by a terminal (a client terminal device) to cause a wearable device to perform an alarming operation. Further, based on the above embodiment, the method of the present embodiment comprises the following steps.

In step 401, when a message regarding an abnormal situation sent by a smart device is received, a current behavior state of a user is detected using a wearable device.

In step 402, a preset scenario mode of the wearable device is acquired.

When the behavior state is the sleeping state and the scenario mode is a do-not-disturb mode, the step 403 is performed, and when the behavior state is the non-sleeping state and the scenario mode is a do-not-disturb mode, the step 403 is performed.

It should be noted that, the step 401 and the step 402 can be performed in other order. That is, the step 402 can be performed prior to the step 401. The details of the steps 401 and 402 can be referred to the description of the steps 301 and 302 in the above embodiment.

The types of the behavior states and the types of the scenario modes have been described in the previous embodiment. In the present embodiment, as an example, the behavior state is a sleeping state or a non-sleeping state, and the scenario mode is a do-not-disturb mode. However, those skilled in the art can combine different behavior states with different scenario modes to obtain different operation types, to enrich the considered factors for selecting notifying operation, and make the message regarding an abnormal situation to be more effectively perceived by the user in different environments or with different behavior states.

In step 403, a second operation type corresponding to the sleeping state and the do-not-disturb mode is acquired.

In step 404, according to the second operation type, the wearable device is triggered to perform a vibration operation with a second intensity.

In order to ensure a better sleep for the user, a do-not-disturb mode is preset. In the do-not-disturb mode, ringing an alarm is generally disallowed. Moreover, the wearable device (such as the bracelet) detects that the user is in the sleeping state. Then, the smart bracelet is triggered to only perform the vibration notifying operation, and the vibration intensity can be determined as a parameter which can wake up a human from sleeping. In addition, the vibration with the second intensity can also have a preset vibration frequency. Thus, by combining the vibration intensity with the vibration frequency, the wearer of the wearable device can be effectively wakened in the do-not-disturb mode.

In step 405, a third operation type corresponding to the non-sleeping state and the do-not-disturb mode is acquired.

In step 406, according to the third operation type, the wearable device is triggered to perform a vibration operation with a third intensity, or the wearable device to perform the vibration operation with the third intensity and a first flashing-light operation.

In many situations the user may preset the do-not-disturb mode in the non-sleeping state, such as in an office or at a meeting, to avoid the ringing of the wearable device to disturb the people around there. At this time, the user is in the non-sleeping state, and he can perceive a flashing light emitted by the wearable device. Therefore, the third operation type when the user is in the non-sleeping state and in the do-not-disturb mode can be set as the operation types of vibration or vibration and flashing lights. Then, according to the third operation type, the wearable device is triggered to perform a vibration operation with the third intensity, or the wearable device to perform the vibration operation with the third intensity and the first flashing-light operation. Thereby, when it is detected that the user is in the non-sleeping state and in the do-not-disturb mode, the user is notified by vibration or vibration and flashing lights, for the user to perceive the notification as soon as possible. Thus, it can ensure the real time performance and effectiveness of the delivery of the message regarding an abnormal situation.

Further, the alarming method also comprises: when no instruction inputted by the user is received within a predetermined time period, the wearable device is triggered to perform a vibration operation with a fourth intensity, or the wearable device is triggered to perform the vibration operation with the fourth intensity and an operation of ringing an alarm with a second level of decibel, or the wearable device is triggered to perform the vibration operation with the fourth intensity, the operation of ringing an alarm with the second level of decibel and a second flashing-light operation. The fourth intensity is larger than the first intensity, and the second level of decibel is larger than the first level of decibel.

The wearable device or the mobile terminal can be provided with a mechanism for counting time after a notifying operation is triggered. If with the preset time period as counted, no instruction (the instruction can be, for example, when perceiving the notifying, the user pressing a confirmation button, and the confirmation message being transmitted to the mobile terminal corresponding to the smart bracelet, or the user directly responding to the notifying message by operating the mobile terminal) inputted by the user is received, it is considered by default that the user does not perceive the current notifying operation. Then, the mobile terminal triggers the wearable device to perform a more intense notifying operation than the previous operation type, for example, processing a vibration operation with a higher vibration amplitude, a faster vibration frequency, notifying by ringing an alarm with a higher volume, even by an on-going beep, notifying by flashing a light with larger brightness or higher frequency, and so on.

Further, when a cancelation instruction inputted by the user is received within a predetermined time period, according to the cancelation instruction, a cancelation message is generated and sent to the smart device for the smart device to cancel the notification message and disable notifying of abnormality according to the cancelation instruction.

In some situations, although the smart device issues a message regarding an abnormal situation, after checking, the user finds out that the abnormality does not exist or the notification of abnormality is an error. Then, the user can press a button on the wearable device to suspend this notification of abnormality. For example, the smart curtain at home issues a message regarding an abnormal situation since it is opened, while, at this time, the user is at home, and sees that the curtain is opened by wind, or the smart camera captures a stranger invading the house, however, the user finds out that this is an acquaintance. Thus, a cancelation instruction can be sent using the wearable device or the mobile terminal, to disable this abnormality alarm.

Further, when an alarming instruction inputted by the user is received within a predetermined time period, according to the alarming instruction, an alarming message is generated. The alarming message is sent out to a receiving party of the alarming message to perform an alarming operation according to the alarming message.

The alarming operation comprises at least one of: turning on a monitoring camera and calling an emergency telephone number.

The user can press an alarming button in the wearable device, to trigger the alarming instruction. The mobile terminal receives the alarming instruction and generates the alarming message. The alarming message is sent to a preset receiving party of the alarming message, for the receiving party to perform a corresponding alarming operation. For example, the alarming operation may be turning on a monitoring camera based on the alarming instruction, for the user to learn about the situation at the site of the smart device which sends the message regarding an abnormality as early as possible, and then take proper handling measures. For example, a smart curtain issues a message regarding an abnormal situation. In case there might be a thief invading the house, the user can input an alarming instruction for a smart camera which receives the alarming message to be turned on, and to capture the whole process of the theft. Or, the user can call an emergency telephone number to effectively notify the abnormality to someone who has the capability to handle the abnormality. For example, when the user himself is at a remote place, the user can send an alarming instruction for a contact of an emergency telephone number who receives the alarming message to arrive at the site to check the abnormality, so as to avoid damage caused by the abnormal situation as much as possible.

Embodiments regarding devices of the present invention will be described as follows. The devices can be configured to perform the methods according to the embodiments of the present invention. Details not disclosed in the embodiments regarding the devices can be referred to the embodiments regarding the methods of the present invention.

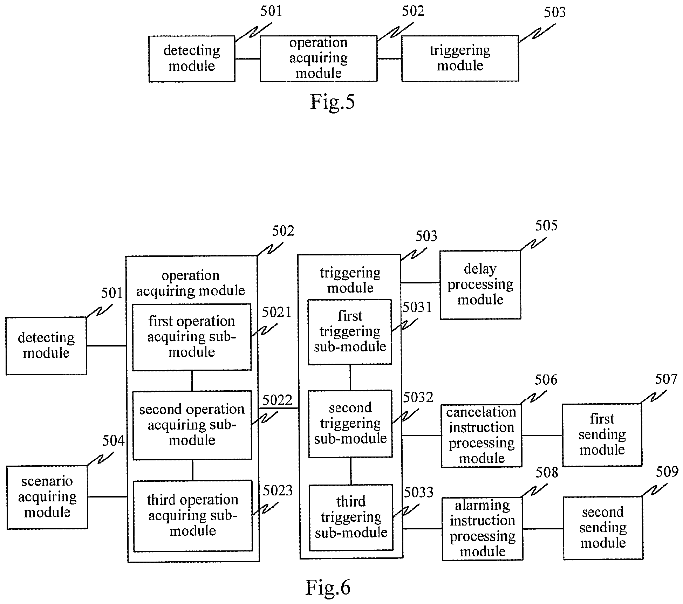

Fig. 5 is a block diagram of an alarming device according to an exemplary embodiment. The alarming device can be implemented with software, hardware or combination of the both, to form a part or the entirety of an electronic device. The alarming device can comprise:
a detecting module 501 configured to, when a message regarding an abnormal situation sent by a smart device is received, detect a current behavior state of a user using a wearable device; an operation acquiring module 502 configured to acquire an operation type corresponding to the behavior state detected by the detecting module 501; and a triggering module 503 configured to trigger the wearable device to perform a corresponding notifying operation according to the operation type acquired by the operation acquiring module 502.

In summary, according to the alarming device provided by the present embodiment, when a message regarding an abnormal situation sent by a smart device is received, a current behavior state of a user is detected using a wearable device. An operation type corresponding to the behavior state is acquired. Then, the wearable device is triggered to perform a corresponding notifying operation according to the operation type. Thereby, the abnormal situation related to the smart device can be promptly notified to the user using the device wore by the user. Moreover, the notifying operation manner is determined taking into consideration the current behavior state of the user which is detected by the wearable device, so as to perform a notifying operation which is most suitable for the current behavior state of the user. Thus, it can ensure the real time performance and effectiveness of the delivery of the message regarding an abnormal situation.

Fig. 6 is a block diagram of an alarming device according to another exemplary embodiment. The alarming device can be implemented with software, hardware or combination of the both, to form a part or the entirety of an electronic device.

Based on the above device embodiment, the operation acquiring module of the alarming device comprises: a first operation acquiring sub-module 5021. The first operation acquiring sub-module 5021 is configured to, when the behavior state detected by the detecting module 501 is the sleeping state, acquire a first operation type corresponding to the sleeping state. The triggering module 5023 comprises: a first triggering sub-module 5031. The first triggering sub-module 5031 is configured to, according to the first operation type acquired by the first operation acquiring sub-module 5021, trigger the wearable device to perform a vibration operation with a first intensity, or trigger the wearable device to perform the vibration operation with the first intensity and an operation of ringing an alarm with a first level of decibel.

In a particular embodiment, the behavior state detected by the detecting module 501 is: a sleeping state or a non-sleeping state; the sleeping state is: a deep sleeping state or a light sleeping state; the non-sleeping state is: a moving state or a stationary state; and the notifying operation triggered by the triggering module comprises at least one of: flashing a light, generating vibration and ringing an alarm.

In a particular embodiment, the alarming device further comprises: a scenario acquiring module 504 configured to acquire a preset scenario mode of the wearable device. The operation acquiring module 502 is further configured to acquire an operation type corresponding to the behavior state detected by the detecting module 501 and the preset scenario mode acquired by the scenario acquiring module 504.

In a particular embodiment, the operation acquiring module 502 comprises: a second operation acquiring sub-module 5022. The second operation acquiring sub-module 5022 is configured to, when the behavior state detected by the detecting module 501 is the sleeping state and the scenario mode acquired by the scenario acquiring module 504 is a do-not-disturb mode, acquire a second operation type corresponding to the sleeping state and the do-not-disturb mode. The triggering module 503 comprises: a second triggering sub-module 5032. The second triggering sub-module 5032 is configured to, according to the second operation type acquired by the second operation acquiring sub-module 5022, trigger the wearable device to perform a vibration operation with a second intensity.

In a particular embodiment, the operation acquiring module 502 comprises: a third operation acquiring sub-module 5023. The third operation acquiring sub-module 5023 is configured to, when the behavior state detected by the detecting module 501 is a non-sleeping state and the scenario mode detected by the detecting module 504 is a do-not-disturb mode, acquire a third operation type corresponding to the non-sleeping state and the do-not-disturb mode. The triggering module 503 comprises: a third triggering sub-module 5033. The third triggering sub-module 5033 is configured to, according to the third operation type acquired by the third operation acquiring sub-module 5023, trigger the wearable device to perform a vibration operation with a third intensity, or trigger the wearable device to perform the vibration operation with the third intensity and a first flashing-light operation.

In a particular embodiment, the alarming device further comprises: a delay processing module 505 configured to, when no instruction inputted by the user is received within a predetermined time period, trigger the wearable device to perform a vibration operation with a fourth intensity, or trigger the wearable device to perform the vibration operation with the fourth intensity and an operation of ringing an alarm with a second level of decibel, or trigger the wearable device to perform the vibration operation with the fourth intensity, the operation of ringing an alarm with the second level of decibel and a second flashing-light operation, wherein the fourth intensity is larger than the first intensity, and the second level of decibel is larger than the first level of decibel.

In a particular embodiment, the alarming device further comprises: a cancelation instruction processing module 506 configured to, when a cancelation instruction inputted by the user is received within a predetermined time period, according to the cancelation instruction, generate a cancelation message; and
a first sending module 507 configured to send the cancelation message generated by the cancelation instruction processing module 506 to the smart device, for the smart device to disable notifying of abnormality according to the cancelation message.

In a particular embodiment, the alarming device further comprises: an alarming instruction processing module 508 configured to, when an alarming instruction inputted by the user is received within a predetermined time period, according to the alarming instruction, generate an alarming message; and
a second sending module 509 configured to send the alarming message generated by the alarming instruction processing module 508, for a receiving party of the alarming message to perform an alarming operation according to the alarming message.

In a particular embodiment, the alarming operation comprises at least one of: turning on a monitoring camera and calling an emergency telephone number.

With respect to the devices in the above embodiments, the specific manners for processing operations for individual modules therein have been described in detail in the embodiments regarding the relevant methods, which will not be elaborated herein.

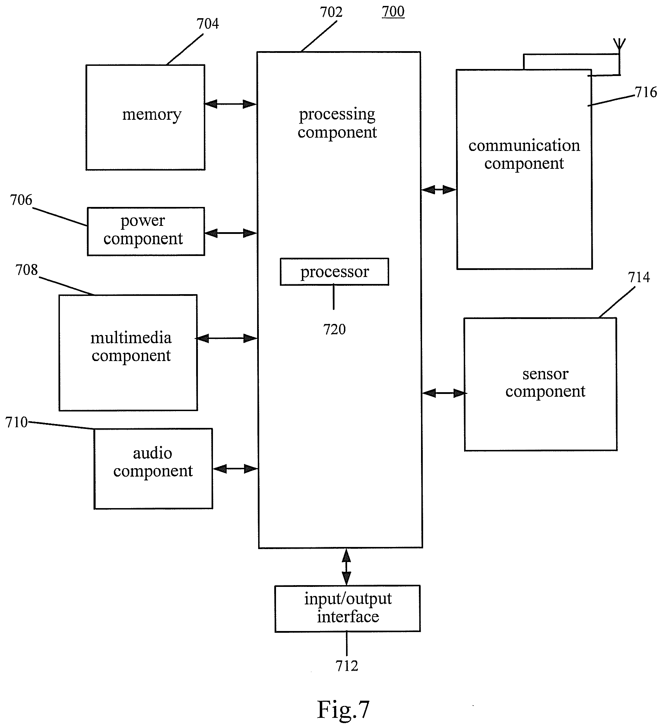

Fig. 7 is a block diagram of an alarming device 700 according to an exemplary embodiment. For example, the alarming device 700 can be a mobile phone, a wearable device, a computer, a digital broadcast terminal, a messaging device, a gaming console, a tablet, a medical device, exercise equipment, a personal digital assistant, a router, a coordinator and the like.

Referring to Fig. 7, the device 700 can comprise one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 can comprise one or more processors 720 to execute instructions to perform all or part of the steps in the above described methods. Moreover, the processing component 702 can comprise one or more modules which facilitate the interaction between the processing component 702 and other components. For instance, the processing component 702 can comprise a multimedia module to facilitate the interaction between the multimedia component 708 and the processing component 702.

The memory 704 is configured to store various types of data to support the operation of the device 700. Examples of such data comprise instructions for any applications or methods operated on the device 700, contact data, phonebook data, messages, pictures, video, etc. The memory 704 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 can comprise a power management system, one or more power sources, and any other components associated with the generation, management, and distribution of power in the device 700.

The multimedia component 708 comprises a screen providing an output interface between the device 700 and the user. In some embodiments, the screen can comprise a liquid crystal display (LCD) and a touch panel (TP). If the screen comprises the touch panel, the screen can be implemented as a touch screen to receive input signals from the user. The touch panel comprises one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 708 comprises a front camera and/or a rear camera. The front camera and the rear camera can receive an external multimedia datum while the device 700 is in an operation mode, such as a photographing mode or a video mode. Each of the front camera and the rear camera can be a fixed optical lens system or have focus and optical zoom capability.

The audio component 710 is configured to output and/or input audio signals. For example, the audio component 710 comprises a microphone ("MIC") configured to receive an external audio signal when the device 700 is in an operation mode, such as a call mode, a recording mode, and a voice recognition mode. The received audio signal can be further stored in the memory 704 or transmitted via the communication component 716. In some embodiments, the audio component 710 further comprises a speaker to output audio signals.

The I/O interface 712 provides an interface between the processing component 702 and peripheral interface modules, such as a keyboard, a click wheel, buttons, and the like. The buttons can comprise, but are not limited to, a home button, a button, a starting button, and a locking button.

The sensor component 714 comprises one or more sensors to provide status assessments of various aspects of the device 700. For instance, the sensor component 714 can detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 714 can comprise a proximity sensor configured to detect the presence of nearby objects without any physical contact. The sensor component 714 can also comprise a light sensor, such as a CMOS or CCD image sensor, for use in imaging applications. In some embodiments, the sensor component 714 can also comprise an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further comprises a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the device 700 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for processing the above described methods.

In exemplary embodiments, there is also provided a non-transitory computer-readable storage medium comprising instructions, such as comprised in the memory 704, executable by the processor 720 in the device 700, for processing the above-described methods. For example, the non-transitory computer-readable storage medium can be a ROM, a RAM, a CD-ROM, a magnetic tape, a floppy disc, an optical data storage device, and the like.

A non-transitory computer readable storage medium, when instructions in the storage medium are executed by a processor of a mobile terminal, the mobile terminal is caused to perform an alarming method. The method comprises:
the memory 704 for storing instructions executable by the processor 720; wherein the processor 720 is configured to perform: when receiving a message regarding an abnormal situation sent by a smart device, detecting a current behavior state of a user using a wearable device; acquiring an operation type corresponding to the behavior state; and triggering the wearable device to perform a corresponding notifying operation according to the operation type.

## Claims

1. An alarming method, performed by a mobile terminal, comprising:
when receiving a message regarding an abnormal situation sent by a smart device, detecting (101, 201, 301, 401) a current behavior state of a user using a wearable device;
acquiring (102) an operation type corresponding to the behavior state; and
triggering (103, 304) the wearable device to perform a corresponding notifying operation according to the operation type,
wherein, the mobile terminal, the smart device, and the wearable device are connected to one another via the Internet or a network of other forms to achieve three-party data communication between the smart device and the mobile terminal and between the mobile terminal and the wearable device; and in that
the abnormal situation occurs related to the smart device.

2. The method of claim 1, wherein
the behavior state is: a sleeping state or a non-sleeping state; the sleeping state is: a deep sleeping state or a light sleeping state; the non-sleeping state is: a moving state or a stationary state; and
the notifying operation comprises at least one of: flashing a light, generating vibration and ringing an alarm.

3. The method of claim 2, wherein
when the behavior state is the sleeping state, acquiring (102) the operation type corresponding to the behavior state comprises:
acquiring (202) a first operation type corresponding to the sleeping state; and
triggering (103, 304) the wearable device to perform the corresponding notifying operation according to the operation type comprises:
according to the first operation type, triggering (203) the wearable device to perform a vibration operation with a first intensity, or triggering the wearable device to perform the vibration operation with the first intensity and an operation of ringing an alarm with a first level of decibel.

4. The method of claim 1, further comprising:
acquiring (302, 402) a preset scenario mode of the wearable device;
and wherein acquiring (102) the operation type corresponding to the behavior state comprises:
acquiring (303) an operation type corresponding to the behavior state and the preset scenario mode.

5. The method of claim 4, wherein
when the behavior state is a sleeping state and the scenario mode is a do-not-disturb mode, acquiring (303) the operation type corresponding to the behavior state and the preset scenario mode comprises:
acquiring (403) a second operation type corresponding to the sleeping state and the do-not-disturb mode; and
triggering (103, 304) the wearable device to perform the corresponding notifying operation according to the operation type comprises:
according to the second operation type, triggering (404) the wearable device to perform a vibration operation with a second intensity.

6. The method of claim 4, wherein
when the behavior state is a non-sleeping state and the scenario mode is a do-not-disturb mode, acquiring (303) the operation type corresponding to the behavior state and the preset scenario mode comprises:
acquiring (405) a third operation type corresponding to the non-sleeping state and the do-not-disturb mode; and
triggering (103, 304) the wearable device to perform the corresponding notifying operation according to the operation type comprises:
according to the third operation type, triggering (406) the wearable device to perform a vibration operation with a third intensity, or triggering the wearable device to perform the vibration operation with the third intensity and a first flashing-light operation.

7. The method of claim 3, further comprising:
when receiving no instruction inputted by the user within a predetermined time period, triggering the wearable device to perform a vibration operation with a fourth intensity, or triggering the wearable device to perform the vibration operation with the fourth intensity and an operation of ringing an alarm with a second level of decibel, or triggering the wearable device to perform the vibration operation with the fourth intensity, the operation of ringing an alarm with the second level of decibel and a second flashing-light operation;
wherein the fourth intensity is larger than the first intensity, and the second level of decibel is larger than the first level of decibel.

8. The method of anyone of claims 1-7, further comprising:
when receiving a cancelation instruction inputted by the user within a predetermined time period, according to the cancelation instruction, generating a cancelation message and sending the cancelation message to the smart device for the smart device to disable notifying of abnormality according to the cancelation message.

9. The method of any one of claims 1-7, further comprising:
when receiving an alarming instruction inputted by the user within a predetermined time period, according to the alarming instruction, generating an alarming message; and
sending the alarming message to a receiving party of the alarming message to perform an alarming operation according to the alarming message.

10. The method of claim 9, wherein the alarming operation comprises at least one of: turning on a monitoring camera and calling an emergency telephone number.

11. A system comprising a mobile terminal, a smart device and a wearable device,
wherein the mobile terminal comprises:
a detecting module (501) configured to, when receiving a message regarding an abnormal situation sent by a smart device, detect a current behavior state of a user using a wearable device;
an operation acquiring module (502) configured to acquire an operation type corresponding to the behavior state detected by the detecting module (501); and
a triggering module (503) configured to trigger the wearable device to perform a corresponding notifying operation according to the operation type acquired by the operation acquiring module (502),
wherein, the mobile terminal, the smart device, and the wearable device are configured to be connected to one another via the Internet or a network of other forms to achieve three-party data communication between the smart device and the mobile terminal and between the mobile terminal and the wearable device; and in that
the abnormal situation occurs related to the smart device.

12. The system of claim 11, wherein the behavior state detected by the detecting module (501) is: a sleeping state or a non-sleeping state; the sleeping state is: a deep sleeping state or a light sleeping state; the non-sleeping state is: a moving state or a stationary state; and
the notifying operation triggered by the triggering module (503) comprises at least one of: flashing a light, generating vibration and ringing an alarm.

13. The system of claim 12, wherein the operation acquiring module (502) comprises: a first operation acquiring sub-module (5021);
wherein the first operation acquiring sub-module (5021) is configured to, when the behavior state detected by the detecting module (501) is the sleeping state, acquire a first operation type corresponding to the sleeping state; and
the triggering module (503) comprises: a first triggering sub-module (5031);
wherein the first triggering sub-module (5031) is configured to, according to the first operation type acquired by the first operation acquiring sub-module (5021), trigger the wearable device to perform a vibration operation with a first intensity, or trigger the wearable device to perform the vibration operation with the first intensity and an operation of ringing an alarm with a first level of decibel.

14. A computer program including instructions for executing the step of a method according to any one of claims 1 to 10 when said program is executed by a computer.

15. A recording medium readable by a computer and having recorded thereon a computer program including instructions for executing the step of a method according to any one of claims 1 to 10.

## Patentansprüche

1. Alarmierungsverfahren, das von einem mobilen Endgerät durchgeführt wird, umfassend:
beim Empfang einer von einem intelligenten Gerät gesendeten Nachricht bezüglich einer anomalen Situation, Erfassen (101, 201, 301, 401) eines aktuellen Verhaltenszustands eines Benutzers unter Verwendung eines am Körper tragbaren Geräts,
Erfassen (102) eines Vorgangstyps, der dem Verhaltenszustand entspricht, und
Auslösen (103, 304) des am Körper tragbaren Geräts zur Durchführung eines entsprechenden Benachrichtigungsvorgangs gemäß dem Vorgangstyp,
wobei das mobile Endgerät, das intelligente Gerät und das am Körper tragbare Gerät über das Internet oder ein Netzwerk anderer Formen miteinander verbunden sind, um eine Drei-Parteien-Datenkommunikation zwischen dem intelligenten Gerät und dem mobilen Endgerät und zwischen dem mobilen Endgerät und dem am Körper tragbaren Gerät zu erreichen, wobei
die anomale Situation im Zusammenhang mit dem intelligenten Gerät auftritt.

2. Verfahren nach Anspruch 1, wobei
der Verhaltenszustand ist: ein Schlafzustand oder ein Nicht-Schlafzustand, der Schlafzustand ist: ein Tiefschlafzustand oder ein leichter Schlafzustand, der Nicht-Schlafzustand ist: ein Bewegungszustand oder ein stationärer Zustand, und
der Benachrichtigungsvorgang mindestens eines umfasst von: Blinken eines Lichts, Erzeugen einer Vibration und Läuten eines Alarms.

3. Verfahren nach Anspruch 2, wobei
das Erfassen (102) des dem Verhaltenszustand entsprechenden Vorgangstyps wenn der Verhaltenszustand der Schlafzustand ist, umfasst:
Erfassen (202) eines ersten Vorgangstyps, der dem Schlafzustand entspricht, und
das Auslösen (103, 304) des am Körper tragbaren Geräts zur Durchführung des entsprechenden Benachrichtigungsvorgangs gemäß dem Vorgangstyp umfasst:
entsprechend dem ersten Vorgangstyp, Auslösen (203) des am Körper tragbaren Geräts, um einen Vibrationsvorgang mit einer ersten Intensität durchzuführen, oder Auslösen des am Körper tragbaren Geräts, um den Vibrationsvorgang mit der ersten Intensität und einen Vorgang des Läutens eines Alarms mit einem ersten Dezibelpegel durchzuführen.

4. Verfahren nach Anspruch 1, ferner umfassend:
Erfassen (302, 402) eines voreingestellten Szenariomodus des am Körper tragbaren Geräts,
wobei das Erfassen (102) des dem Verhaltenszustand entsprechenden Vorgangstyps umfasst:
Erfassen (303) eines Vorgangstyps, der dem Verhaltenszustand und dem voreingestellten Szenariomodus entspricht.

5. Verfahren nach Anspruch 4, wobei,
wenn der Verhaltenszustand ein Schlafzustand ist und der Szenariomodus ein Nicht-Stören-Modus ist,
das Erfassen (303) des Vorgangstyps, der dem Verhaltenszustand und dem voreingestellten Szenariomodus entspricht, umfasst:
Erfassen (403) eines zweiten Vorgangstyps, der dem Schlafzustand und dem Nicht-Stören-Modus entspricht, und
das Auslösen (103, 304) des am Körper tragbaren Geräts zur Durchführung des entsprechenden Benachrichtigungsvorgangs gemäß dem Vorgangstyp umfasst:
Auslösen (404) des am Körper tragbaren Geräts entsprechend dem zweiten Vorgangstyp zur Durchführung eines Vibrationsvorgangs mit einer zweiten Intensität.

6. Verfahren nach Anspruch 4, wobei,
wenn der Verhaltenszustand ein Nicht-Schlafzustand ist und der Szenariomodus ein Nicht-Stören-Modus ist,
das Erfassen (303) des Vorgangstyps, der dem Verhaltenszustand und dem voreingestellten Szenariomodus entspricht, umfasst:
Erfassen (405) eines dritten Vorgangstyps, der dem Nicht-Schlafzustand und dem Nicht-Stören-Modus entspricht, und
das Auslösen (103, 304) des am Körper tragbaren Geräts zur Durchführung des entsprechenden Benachrichtigungsvorgangs gemäß dem Vorgangstyp umfasst:
Auslösen (406) des am Körper tragbaren Geräts entsprechend dem dritten Vorgangstyp, um einen Vibrationsvorgang mit einer dritten Intensität durchzuführen, oder Auslösen des am Körper tragbaren Geräts, um den Vibrationsvorgang mit der dritten Intensität und einen ersten Blinklichtvorgang durchzuführen.

7. Verfahren nach Anspruch 3, ferner umfassend:
wenn innerhalb einer vorbestimmten Zeitspanne keine vom Benutzer eingegebene Anweisung empfangen wird, Auslösen des am Körper tragbaren Geräts, um einen Vibrationsvorgang mit einer vierten Intensität durchzuführen, oder Auslösen des am Körper tragbaren Geräts, um den Vibrationsvorgang mit der vierten Intensität und einen Vorgang des Läutens eines Alarms mit einem zweiten Dezibelpegel durchzuführen, oder Auslösen des am Körper tragbaren Geräts, um den Vibrationsvorgang mit der vierten Intensität, den Vorgang des Läutens eines Alarms mit dem zweiten Dezibelpegel und einen zweiten Blinklichtvorgang durchzuführen,
wobei die vierte Intensität größer ist als die erste Intensität und der zweite Dezibelpegel größer ist als der erste Dezibelpegel.

8. Verfahren nach einem der Ansprüche 1 bis 7, ferner umfassend:
wenn eine vom Benutzer innerhalb einer vorbestimmten Zeitspanne eingegebene Abbruchanweisung empfangen wird, Erzeugen einer Abbruchnachricht entsprechend der Abbruchanweisung und Senden der Abbruchnachricht an das intelligente Gerät, damit das intelligente Gerät die Benachrichtigung über eine Anomalität entsprechend der Abbruchnachricht deaktiviert.

9. Verfahren nach einem der Ansprüche 1 bis 7, ferner umfassend:
beim Empfang einer Alarmierungsanweisung, die vom Benutzer innerhalb einer vorbestimmten Zeitspanne eingegeben wird, Erzeugen eine Alarmierungsmeldung entsprechend der Alarmierungsanweisung und
Senden der Alarmierungsmeldung an einen Empfänger der Alarmierungsmeldung, um einen Alarmierungsvorgang gemäß der Alarmierungsmeldung durchzuführen.

10. Verfahren nach Anspruch 9, wobei der Alarmierungsvorgang mindestens eines umfasst von: Einschalten einer Überwachungskamera und Anrufen einer Notrufnummer.

11. System Mobiles umfassend ein mobiles Endgerät, ein intelligentes Gerät und ein am Körper tragbares Gerät, wobei das mobile Gerät umfasst:
ein Erfassungsmodul (501), das so konfiguriert ist, dass es beim Empfang einer von einem intelligenten Gerät gesendeten Nachricht bezüglich einer anomalen Situation einen aktuellen Verhaltenszustand eines Benutzers erfasst, der ein am Körper tragbares Gerät verwendet,
ein Vorgangserfassungsmodul (502), das so konfiguriert ist, dass es einen Vorgangstyp erfasst, der dem von dem Erfassungsmodul (501) erfassten Verhaltenszustand entspricht, und
ein Auslösemodul (503), das so konfiguriert ist, dass es das am Körper tragbare Gerät auslöst, um einen entsprechenden Benachrichtigungsvorgang gemäß dem vom Vorgangserfassungsmodul (502) erfassten Vorgangstyp durchzuführen,
wobei das mobile Endgerät, das intelligente Gerät und das am Körper tragbare Gerät dazu konfiguriert sind, über das Internet oder ein Netzwerk anderer Formen miteinander verbunden zu werden, um eine Drei-Parteien-Datenkommunikation zwischen dem intelligenten Gerät und dem mobilen Endgerät und zwischen dem mobilen Endgerät und dem am Körper tragbaren Gerät zu erreichen, und dadurch, dass
die anomale Situation im Zusammenhang mit dem intelligenten Gerät auftritt.

12. System nach Anspruch 11, wobei
der von dem Erfassungsmodul (501) erfasste Verhaltenszustand ist: ein Schlafzustand oder ein Nicht-Schlafzustand, der Schlafzustand ist: ein Tiefschlafzustand oder ein leichter Schlafzustand, der Nicht-Schlafzustand ist: ein Bewegungszustand oder ein stationärer Zustand, und
der durch das Auslösemodul (503) ausgelöste Benachrichtigungsvorgang mindestens eines umfasst von: Blinken eines Lichts, Erzeugen einer Vibration und Läuten eines Alarms.

13. System nach Anspruch 12, wobei das Vorgangserfassungsmodul (502) umfasst: ein erstes Vorgangserfassungsuntermodul (5021),
wobei das erste Vorgangserfassungsuntermodul (5021) so konfiguriert ist, dass es, wenn der durch das Erfassungsmodul (501) erfasste Verhaltenszustand der Schlafzustand ist, einen ersten Vorgangstyp erfasst, der dem Schlafzustand entspricht, und
das Auslösemodul (503) umfasst: ein erstes Auslöseuntermodul (5031),
wobei das erste Auslöseuntermodul (5031) konfiguriert ist, um gemäß dem ersten Vorgangstyp, der durch das erste Vorgangserfassungsuntermodul (5021) erfasst wird, das am Körper tragbare Gerät auszulösen, um einen Vibrationsvorgang mit einer ersten Intensität durchzuführen, oder das am Körper tragbare Gerät auszulösen, um den Vibrationsvorgang mit der ersten Intensität und einen Vorgang des Läutens eines Alarms mit einem ersten Dezibelpegel durchzuführen.

14. Computerprogramm mit Anweisungen zur Ausführung der Schritte des Verfahrens nach einem der Ansprüche 1 bis 10, wenn das Programm von einem Computer ausgeführt wird.

15. Aufzeichnungsmedium, das von einem Computer lesbar ist und auf dem ein Computerprogramm aufgezeichnet ist, das Anweisungen zum Ausführen der Schritte eines Verfahrens nach einem der Ansprüche 1 bis 10 enthält.

## Revendications

1. Procédé d'alarme, effectué par un terminal mobile, comprenant :
lors de la réception d'un message concernant une situation anormale envoyé par un dispositif intelligent, la détection (101, 201, 301, 401) d'un état de comportement actuel d'un utilisateur utilisant un dispositif portatif ;
l'acquisition (102) d'un type d'opération correspondant à l'état de comportement ; et
le déclenchement (103, 304) du dispositif portatif pour effectuer une opération de notification correspondante selon le type d'opération,
dans lequel,
le terminal mobile, le dispositif intelligent, et le dispositif portatif sont connectés entre eux via l'Internet ou d'autres formes de réseaux pour réaliser une communication de données tripartite entre le dispositif intelligent et le terminal mobile et entre le terminal mobile et le dispositif portatif ; et en ce que
la situation anormale se produit en rapport avec le dispositif intelligent.

2. Procédé de la revendication 1, dans lequel
l'état de comportement est : un état de sommeil ou un état de non sommeil ; l'état de sommeil est : un état de sommeil profond ou un état de sommeil léger ; l'état de non sommeil est : un état de mouvement ou un état immobile ; et
l'opération de notification comprend au moins l'une des opérations suivantes : le clignotement d'une lumière, la génération de vibrations et la sonnerie d'une alarme

3. Procédé de la revendication 2, dans lequel
lorsque l'état de comportement est l'état de sommeil, l'acquisition (102) du type d'opération correspondant à l'état de comportement comprend :
l'acquisition (202) d'un premier type d'opération correspondant à l'état de sommeil ; et
le déclenchement (103, 304) du dispositif portatif pour effectuer l'opération de notification correspondante selon le type d'opération comprend :
selon le premier type d'opération, le déclenchement (203) du dispositif portatif pour effectuer une opération de vibration avec une première intensité, ou le déclenchement du dispositif portatif pour effectuer l'opération de vibration avec la première intensité et une opération de sonnerie d'une alarme avec un premier niveau de décibels.

4. Procédé de la revendication 1, comprenant en outre :
l'acquisition (302, 402) d'un mode de cas de figure prédéfini du dispositif portatif ;
et dans lequel l'acquisition (102) du type d'opération correspondant à l'état de comportement comprend :
l'acquisition (303) d'un type d'opération correspondant à l'état de comportement et au mode de cas de figure prédéfini.

5. Procédé de la revendication 4, dans lequel
lorsque l'état de comportement est un état de sommeil et que le mode de cas de figure est un mode "ne pas déranger", l'acquisition (303) du type d'opération correspondant à l'état de comportement et au mode de cas de figure prédéfini comprend :
l'acquisition (403) d'un deuxième type d'opération correspondant à l'état de sommeil et au mode "ne pas déranger" ; et
le déclenchement (103, 304) du dispositif portatif pour effectuer l'opération de notification correspondante selon le type d'opération comprend :
selon le deuxième type d'opération, le déclenchement (404) du dispositif portatif pour effectuer une opération de vibration avec une deuxième intensité.

6. Procédé de la revendication 4, dans lequel
lorsque l'état de comportement est un état de non sommeil et que le mode de cas de figure est un mode "ne pas déranger", l'acquisition (303) du type d'opération correspondant à l'état de comportement et au mode de cas de figure prédéfini comprend :
l'acquisition (405) d'un troisième type d'opération correspondant à l'état de non sommeil et au mode "ne pas déranger" ; et
le déclenchement (103, 304) du dispositif portatif pour effectuer l'opération de notification correspondante selon le type d'opération comprend :
selon le troisième type d'opération, le déclenchement (406) du dispositif portatif pour effectuer une opération de vibration avec une troisième intensité, ou le déclenchement du dispositif portatif pour effectuer l'opération de vibration avec la troisième intensité et une première opération de clignotement de lumière.

7. Procédé de la revendication 3, comprenant en outre :
en l'absence de réception d'instruction entrée par l'utilisateur dans une période de temps prédéterminée, le déclenchement du dispositif portatif pour effectuer une opération de vibration avec une quatrième intensité, ou le déclenchement du dispositif portatif pour effectuer l'opération de vibration avec la quatrième intensité et une opération de sonnerie d'une alarme avec un deuxième niveau de décibels, ou le déclenchement du dispositif portatif pour effectuer l'opération de vibration avec la quatrième intensité, l'opération de sonnerie d'une alarme avec le deuxième niveau de décibels et une deuxième opération de clignotement de lumière ;
dans lequel la quatrième intensité est supérieure à la première intensité, et le deuxième niveau de décibels est supérieur au premier niveau de décibels.

8. Procédé de l'une quelconque des revendications 1 à 7, comprenant en outre :
lors de la réception d'une instruction d'annulation entrée par l'utilisateur dans une période de temps prédéterminée, selon l'instruction d'annulation, la génération d'un message d'annulation et l'envoi du message d'annulation au dispositif intelligent pour que le dispositif intelligent désactive la notification d'anomalie selon le message d'annulation.

9. Procédé de l'une quelconque des revendications 1 à 7, comprenant en outre :
lors de la réception d'une instruction d'alarme entrée par l'utilisateur dans une période de temps prédéterminée, selon l'instruction d'alarme, la génération d'un message d'alarme ; et
l'envoi du message d'alarme à une partie de réception du message d'alarme pour effectuer une opération d'alarme selon le message d'alarme.

10. Procédé de la revendication 9, dans lequel l'opération d'alarme comprend au moins l'une des opérations suivantes : la mise en marche d'une caméra de surveillance et l'appel d'un numéro de téléphone d'urgence.

11. Système comprenant un terminal mobile, un dispositif intelligent et un dispositif portatif, dans lequel le terminal mobile comprend :
un module de détection (501) configuré pour, lors de la réception d'un message concernant une situation anormale envoyé par un dispositif intelligent, détecter un état de comportement actuel d'un utilisateur utilisant un dispositif portatif ;
un module d'acquisition d'opération (502) configuré pour acquérir un type d'opération correspondant à l'état de comportement détecté par le module de détection (501) ; et
un module de déclenchement (503) configuré pour déclencher le dispositif portatif pour effectuer une opération de notification correspondante selon le type d'opération acquis par le module d'acquisition d'opération (502),
dans lequel,
le terminal mobile, le dispositif intelligent, et le dispositif portatif sont configurés pour être connectés entre eux via l'Internet ou d'autres formes de réseaux pour réaliser une communication de données tripartite entre le dispositif intelligent et le terminal mobile et entre le terminal mobile et le dispositif portatif ; et en ce que
la situation anormale se produit en rapport avec le dispositif intelligent.

12. Système de la revendication 11, dans lequel
l'état de comportement détecté par le module de détection (501) est : un état de sommeil ou un état de non sommeil ; l'état de sommeil est : un état de sommeil profond ou un état de sommeil léger ; l'état de non sommeil est : un état de mouvement ou un état immobile ; et
l'opération de notification déclenchée par le module de déclenchement (503) comprend au moins l'une des opérations suivantes : le clignotement d'une lumière, la génération de vibrations et la sonnerie d'une alarme.

13. Système de la revendication 12, dans lequel le module d'acquisition d'opération (502) comprend : un premier sous-module d'acquisition d'opération (5021) ;
dans lequel le premier sous-module d'acquisition d'opération (5021) est configuré pour, lorsque l'état de comportement détecté par le module de détection (501) est l'état de sommeil, acquérir un premier type d'opération correspondant à l'état de sommeil ; et
le module de déclenchement (503) comprend : un premier sous-module de déclenchement (5031) ;
dans lequel le premier sous-module de déclenchement (5031) est configuré pour, selon le premier type d'opération acquis par le premier sous-module d'acquisition d'opération (5021), déclencher le dispositif portatif pour effectuer une opération de vibration avec une première intensité, ou déclencher le dispositif portatif pour effectuer l'opération de vibration avec la première intensité et une opération de sonnerie d'une alarme avec un premier niveau de décibels.

14. Programme informatique comportant des instructions pour exécuter l'étape d'un procédé selon l'une quelconque des revendications 1 à 10 lorsque ledit programme est exécuté par un ordinateur.

15. Support d'enregistrement lisible par un ordinateur et sur lequel est enregistré un programme informatique comportant des instructions pour exécuter l'étape d'un procédé selon l'une quelconque des revendications 1 à 10.
